# DEMANDE DE BREVET EUROPEEN

(11) **EP 1 300 747 A1**
(43) Date de publication de la demande: **09.04.2003**
(21) Numéro de dépôt: 01440334.9
(22) Date de dépôt: 04.10.2001
(51) Int. Cl.: G06F 1/00

(54) **Procédé d'apposition en ligne d'une pluralité de signatures numériques sur un document életronique**

(71) Demandeur: MSG Software SARL, 90000 Belfort (FR)
(72) Inventeur: Wack, Maxime, 90000 Belfort (FR); Mignot, Bernard, 90120 Morvillars (FR); Monnier, J.C., 90130 Petit-Croix (FR); Gontard, Steve, 68780 Sternenberg (FR); Cottin, Nathanael, 25200 Montbeliard (FR)
(74) Mandataire: Nithardt, Roland

(57) **Abrégé**

La présente invention concerne un procédé d'apposition en ligne d'une pluralité de signatures numériques sur un document électronique.

Il est caractérisé en ce qu'il comporte une première phase qui est l'émission d'une notification de signature, une deuxième phase qui est l'ajout d'une signature et une troisième phase qui est la clôture du procédé de signatures multiples. Au cours de la première phase d'amorçage, l'émetteur du document à signer met le document accompagné d'un message codé à la disposition de chacun des signataires au moyen d'un ordinateur équipé d'un modem ou de tout équipement équivalent permettant de transmettre des documents électroniques. Au cours de la deuxième phase, tout signataire apte à décoder le message qui lui est destiné est autorisé à signer le document reçu et, au cours de la troisième phase, l'émetteur ayant reçu et vérifié l'ensemble des signatures appose sa contre signature sur les signatures reçues afin d'empêcher une modification ultérieure.

## Description

La présente invention concerne un procédé d'apposition en ligne d'une pluralité de signatures numériques sur un document électronique.

De nombreux documents officiels tels que par exemple des actes notariés, des dépôts de brevet, des contrats, notamment des contrats de vente ou de partenariat entre industriels, etc. sont soumis à des signatures multiples pour être validés. Les échanges de documents électroniques deviennent de plus en plus nombreux et la signature de ces documents qui formalisent souvent une relation ou un acte entre plusieurs partenaires nécessite l'apposition de plusieurs signatures. Les partenaires ne se trouvent pas obligatoirement sur le même site géographique au même moment et la signature multiple du document implique une circulation de ce document et l'apposition des signatures numériques des parties prenantes.

L'apposition d'une signature numérique sur un document électronique a fait l'objet de nombreux standards. La signature numérique repose sur la cryptographie à clé publique et le calcul d'empreinte numérique. A ce propos, il convient de rappeler quelques définitions :
- . Est appelé « document électronique » toute donnée informatique composée de bits. Il peut aussi bien s'agir d'un document alphanumérique que d'une image, d'un certificat électronique ou encore d'une clé de cryptage, par exemple d'une clé publique, d'une clé privée, d'une clé de cession, etc.
- . « L'empreinte » ou « résumé de message » est une fonction mathématique non réversible qui permet de compresser un document de taille quelconque en une donnée de taille fixe. Il est pratiquement impossible de retrouver le document original en ayant pour seule connaissance l'empreinte dudit document. Les algorithmes d'empreintes les plus utilisés actuellement sont SHA-1(Nist 95) et MD5(Rivest 92).
- . La « signature numérique » est le résultat de l'application d'un traitement informatique sur une empreinte. Une signature numérique consiste à chiffrer (ou crypter) l'empreinte d'un document à l'aide d'une clé privée.
- . La « clé privée » également appelée clé de signature est la clé servant à apposer une signature numérique. Chaque clé est unique et conservée secrète par son propriétaire. Toute clé privée peut être ou non activée par un mot de passe.
- . La « clé publique » également appelée clé de vérification est une clé unique liée à une clé privée unique. A une clé publique donnée correspond une clé privée unique et inversement. Chaque clé publique permet de vérifier une signature créée à l'aide de la clé privée correspondante.
- . La « clé de cession » est une clé unique différente pour chaque procédé de signature multiple. Cette clé permet à la fois de chiffrer (ou crypter) et de déchiffrer (ou décrypter) un document.
- . Le « certificat électronique de clé publique » est une pièce d'identité électronique permettant de prouver l'appartenance d'une clé de vérification à une entité donnée, soit une personne physique, soit un programme, soit un serveur.
- . « Chiffrer » également appelé crypter est une opération qui consiste à utiliser une clé de chiffrement, généralement une clé publique ou une clé de cession, afin de rendre incompréhensible la lecture d'un document à toute personne ou au moyen de tout programme ne disposant pas de la clé de déchiffrement, à savoir la clé privée correspondant à la clé publique utilisée dans le premier cas ou la clé de cession dans le second cas.
- . « Contresigner » signifie apposer une signature numérique au-dessus d'une ou de plusieurs autres signatures numériques.

Pour qu'un document soit légal au regard de certaines législations, en particulier selon la loi française du 13 mars 2000 relative à l'écrit électronique, et de son décret d'application, il doit être signé à l'aide d'une signature électronique sécurisée par une personne physique appelée signataire. Cette notion de signataire peut être étendue aux programmes informatiques et aux serveurs.

Cette loi, en particulier, ne tient pas compte du fait qu'un document électronique, tout comme la plupart des documents manuscrits, peut être signé par plusieurs personnes. Les problèmes qui se posent dans ce cas sont les suivants :
- . il faut définir par l'informatique ce qu'est un document électronique comportant plusieurs signatures,
- . il faut définir le procédé permettant d'obtenir un document comportant des signatures multiples,
- . il faut autoriser les personnes habilitées à apposer leur signature,
- . il faut garantir la pérennité des signatures dans le temps.

Le procédé de signature multiple implique au moins deux acteurs qui peuvent être d'une part l'émetteur du document qui est alors le premier signataire et d'autre part le ou les cosignataires. Chacun de ces acteurs doit disposer d'un certificat électronique. L'émetteur doit en outre disposer de l'ensemble des certificats électroniques des signataires et doit pouvoir générer des empreintes numériques compréhensibles par tous les signataires.

La présente invention a pour but d'offrir un procédé simple et efficace pour permettre de signer de façon multiple un document électronique au moyen de signatures numériques.

Ce but est atteint par le procédé selon l'invention qui se décompose en trois phases : une première phase qui est l'émission d'une notification de signature, une deuxième phase qui est l'ajout d'une signature et une troisième phase qui est la clôture du procédé de signatures multiples.

D'une manière préférentielle, au cours de la première phase d'amorçage, l'émetteur du document à signer met le document accompagné d'un message codé à la disposition de chacun des signataires au moyen d'un ordinateur équipé de moyens permettant de transmettre des documents électroniques.

Ce message codé est avantageusement spécifique et différent pour chacun des signataires et est codé à l'aide de la clé publique contenue dans le certificat électronique de chaque signataire.

De préférence, au cours de la deuxième phase, tout signataire apte à décoder le message qui lui est destiné est autorisé à signer le document reçu et retourne sa signature à l'émetteur afin qu'il puisse la vérifier et la prendre en compte.

Enfin, au cours de la troisième phase, l'émetteur ayant reçu et vérifié l'ensemble des signatures appose sa contre signature sur les signatures reçues afin d'empêcher une modification ultérieure.

Selon les cas, l'émetteur pourra horodater sa signature afin de prouver d'une manière certaine l'existence du document et des signatures à l'heure et à la date indiquées.

La présente invention et ses avantages seront mieux compris à la lecture de la description détaillée ci-dessous d'une mise en oeuvre préférée du procédé de l'invention et en référence aux dessins annexés dans lesquels :
- la figure 1 est une vue schématique illustrant au moins partiellement le principe de la mise en oeuvre du procédé selon l'invention, et
- la figure 2 illustre schématiquement les équipements techniques requis pour mettre en oeuvre ce procédé.

Selon un mode de réalisation préféré, au cours de la première phase qui est en fait l'amorçage du procédé, l'émetteur du document à signer met le document accompagné d'un message codé à la disposition de chacun des signataires. Les messages codés sont spécifiques et différents pour chacun des signataires. Cette mise à disposition s'effectue au moyen d'un ordinateur équipé d'un modem ou de tout équipement équivalent permettant de transmettre des documents électroniques. Le message est codé à l'aide de la clé publique contenue dans le certificat électronique de chaque signataire.

Au cours de la deuxième phase, tout signataire apte à décoder le message qui lui est destiné est autorisé à signer le document reçu. Une personne étrangère ne pourra accéder aux informations décodées contenues dans le message codé et ne pourra pas authentifier le document reçu. Le signataire retourne sa signature qui peut être horodatée à l'émetteur afin qu'il puisse la vérifier et la prendre en compte.

Au cours de la troisième phase, l'émetteur ayant reçu et vérifié l'ensemble des signatures appose sa contre signature sur les signatures reçues afin d'empêcher une modification ultérieure, par exemple un rajout ou une suppression de signature. Il pourra éventuellement horodater sa signature afin de prouver d'une manière certaine l'existence du document et des signatures à l'heure et à la date indiquées.

L'amorce du procédé d'apposition de signatures multiples est réalisée par l'émetteur qui peut ou non faire partie des signataires et repose sur l'envoi d'une clé de cession appelée K par la suite, chiffrée à chacun des signataires. Seuls les signataires seront en mesure de déchiffrer la clé de cession qui permettra l'accès à des informations confidentielles. Les étapes de cette amorce sont les suivantes :
- . La création d'une clé de cession K au moyen d'un ordinateur et d'un logiciel de cryptage approprié. Cette clé servira à conserver secrètes certaines informations nécessaires au bon déroulement du procédé.
- . L'attribution pour l'émetteur d'un identifiant unique affecté au procédé.
- . La création des empreintes témoins du document. D'autres empreintes pourront être ajoutées en fonction des besoins.
- . L'envoi à chaque signataire d'une demande de signature comprenant :
   1. L'identifiant du procédé chiffré à l'aide de la clé publique contenue dans le certificat électronique du signataire puis signé à l'aide de la clé de signature de l'émetteur. Cette signature permettra au futur signataire de vérifier que la demande de signature émane effectivement de l'émetteur.
   2. La clé K chiffrée à l'aide de la clé publique contenue dans le certificat électronique du signataire. Le chiffrement de K implique que seul le signataire destinataire de l'envoi puisse déchiffrer la clé K.
   3. L'ensemble des empreintes témoins chiffrées à l'aide de la clé K.
   4. Le document à signer. Ce dernier pourra être chiffré à l'aide de la clé K afin que toute personne étrangère au procédé ne puisse pas apposer sa signature. Ce chiffrage est facultatif et permet de conserver secret le document jusqu'à obtention de l'ensemble des signatures sur ce dernier.
   5. La date de clôture du procédé, date à laquelle toutes les signatures doivent être collectées par l'émetteur. Cette date est chiffrée à l'aide de la clé de cession K.
   6. La politique qui sera appliquée en cas de non-respect du délai de signature ou date de clôture chiffrée à l'aide de la clé de cession K.
   7. Le certificat électronique de l'émetteur ou tout autre moyen permettant d'obtenir son certificat et de vérifier sa validité par le biais d'un protocole approprié, par exemple le protocole OCSP.

L'ajout d'une signature supplémentaire sur le document implique les étapes suivantes :
1. La lecture et la vérification du certificat de l'émetteur.
2. La vérification de la signature de l'émetteur sur l'identifiant du procédé et le décodage à l'aide de la clé privée afin d'obtenir l'identifiant qui avait été chiffré par l'émetteur.
3. Le déchiffrement de la clé de cession K à l'aide de la clé privée. Le résultat en est l'obtention de la clé de cession K en clair, ce qui la rend utilisable pour déchiffrer les informations préalablement chiffrées par l'émetteur. On notera que seul le destinataire est en mesure de déchiffrer K.
4. Le décodage des empreintes témoins à l'aide de la clé de cession K.
5. La vérification de l'empreinte choisie parmi les empreintes proposées sur le document. L'objectif est de vérifier que le document reçu est effectivement le document envoyé par l'émetteur.
6. La signature de l'empreinte vérifiée et éventuellement horodatée. Cette signature sera contrôlée par l'émetteur.
7. Le chiffrement de l'identifiant du procédé à l'aide de la clé publique fournie par le certificat de l'émetteur.
8. L'envoi à l'émetteur :
   - de l'identifiant du procédé chiffré à l'étape précédente,
   - de la signature effectuée à l'étape 6,
   - du certificat du signataire. Ce certificat pourra être différent du certificat dont dispose l'émetteur. Cependant les données relatives à l'identification du signataire devront correspondre aux informations dont dispose l'émetteur.
9. L'attente de la notification de réception de l'émetteur. Lorsque l'émetteur reçoit une signature, il la vérifie et retourne au signataire un accusé de réception comprenant l'identifiant du procédé chiffré et signé ainsi que le certificat de l'émetteur.

La clôture des signatures est réalisée à une date déterminée par l'émetteur qui doit procéder aux démarches suivantes :
- . Vérifier que toutes les signatures sont présentes. Pour chaque signature absente, une relance sera envoyée. Pour toute erreur constatée lors de la vérification d'une signature, une relance sera également envoyée. Les autres signataires recevront une notification de la modification de la date de clôture du procédé.
- . Créer une enveloppe contenant :

- le document original (non chiffré à l'aide de la clé de cession K),
- l'ensemble des signatures et des certificats des signataires,
- sa contre signature apposée sur les signatures. Cette contre signature empêche toute modification ultérieure des signatures apposées par les différents signataires. En particulier l'ajout ou la suppression d'une signature devient impossible lorsque la contre signature a été apposée.
- son certificat électronique.
- . Informer chaque signataire du bon déroulement de la clôture du procédé en envoyant un récépissé de clôture du procédé. Ce récépissé contient :

- l'identifiant du procédé signé et chiffré,
- la date de clôture signée, au moyen de l'apposition de la date locale ou par horodatage. Cette date est généralement différente de la date de clôture initialement prévue.
- le succès ou l'échec de l'ajout de sa signature au document à signer.
- le certificat de l'émetteur.

Une relance émanant de l'émetteur du procédé à destination d'un signataire comprend :
- l'identifiant chiffré et signé tel qu'envoyé lors de la demande de signature avec une clé différente ou non de la clé de cession K,
- la raison de la relance signée telle que l'absence de signature du signataire ou une erreur constatée par l'émetteur lors de la vérification de la signature du signataire,
- une date d'échéance signée,
- la politique qui sera appliquée à l'échéance de cette date. Cette politique sera elle aussi signée par l'émetteur.
- le certificat de l'émetteur.

Lorsque au moins un signataire n'a pas envoyé sa signature à la date de clôture prévue ou qu'une erreur de contrôle de sa signature s'est produite et qu'une politique de clôture du procédé ne s'applique pas, l'émetteur lui envoie une relance. Il envoie de plus à chaque signataire une notification relative à la modification de la date de clôture comprenant :
- l'identifiant chiffré et signé tel qu'envoyé lors de la demande de signature,
- la raison de la modification éventuellement signée,
- la nouvelle date de clôture signée,
- le certificat de l'émetteur.

La pérennité de la signature doit être assurée. La faculté pour un tiers de pouvoir deviner la clé de signature d'un signataire dépend de la puissance des ordinateurs. Cette clé est normalement conservée secrète par le signataire. Cependant, la puissance des ordinateurs évoluant sans cesse, même si une clé de taille suffisante nécessite plusieurs millions d'années de calcul actuellement pour être découverte, elle pourra éventuellement être identifiée facilement par un fraudeur à l'avenir. II est nécessaire qu'une personne mal intentionnée ne puisse pas découvrir la clé de signature de l'émetteur et modifier les données en utilisant le procédé.

Les documents signés par plusieurs personnes sont souvent destinés à être conservés chez un tiers archiveur. La pérennité des signatures peut être assurée par ce dernier, ce qui est le cas le plus probable, ou par l'émetteur qui devra alors périodiquement réactualiser son certificat et contresigner sa signature antérieure par sa nouvelle signature.

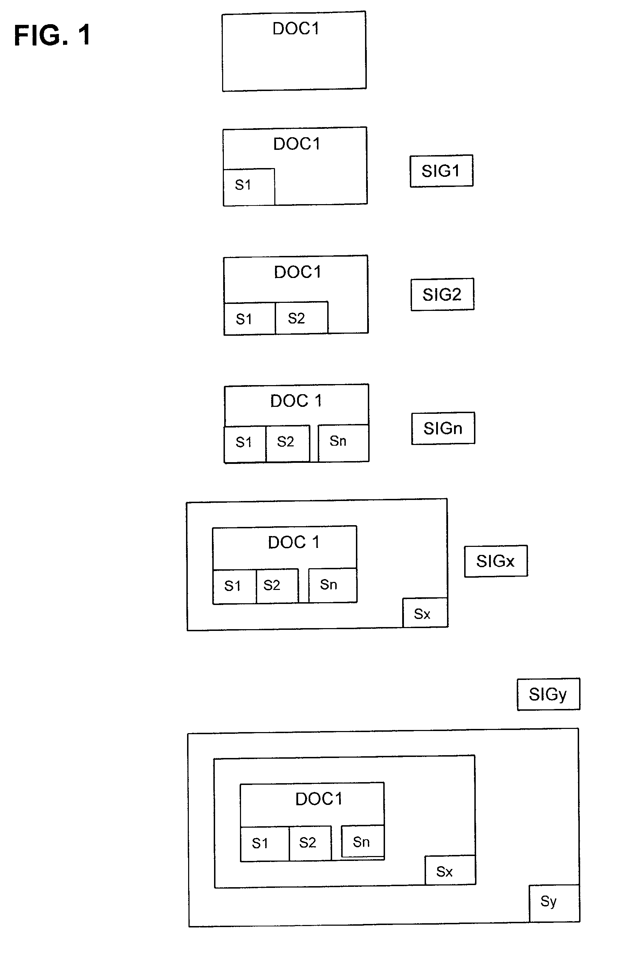

Comme le montre la figure 1, le document appelé DOC1 est par exemple transmis par l'émetteur à un premier signataire appelé SIG1 qui appose sa signature S1 sur ce document qui est ensuite transmis à un deuxième signataire SIG2 qui appose sa signature S2 et ainsi de suite jusqu'au dernier signataire SIGn qui appose sa signature Sn. On notera que toutes ces signatures sont de même « niveau », chacune ayant pour objet la validation du document DOC1 et non celle des signatures apposées antérieurement. Lorsque toutes les signatures figurent sur le document, une personne qui est appelée le signataire SIGx appose sa signature Sx sur le document DOC1 revêtu de l'ensemble des signatures S1, S2...Sn. Cette personne peut être par exemple un notaire ou un expert comptable ou tout autre tiers habilité pouvant être appelé le tiers archiveur par exemple si sa fonction est celle d'archiver le document. Cette signature Sx est une signature de validation à la fois du document et des signatures antérieures. On l'appellera une sur-signature. Le nombre des sur-signatures n'est pas limité. Une signature de validation Sy à la fois du document DOC1, des signatures S1, S2...Sn et de la sur-signature Sx peut être apposée par un signataire SIGy. Il en est par exemple ainsi de certains documents officiels qui doivent être signés par une personne autorisée d'une entreprise dont la signature doit être attestée par un notaire et dont la signature doit être certifiée par les services d'une ambassade.

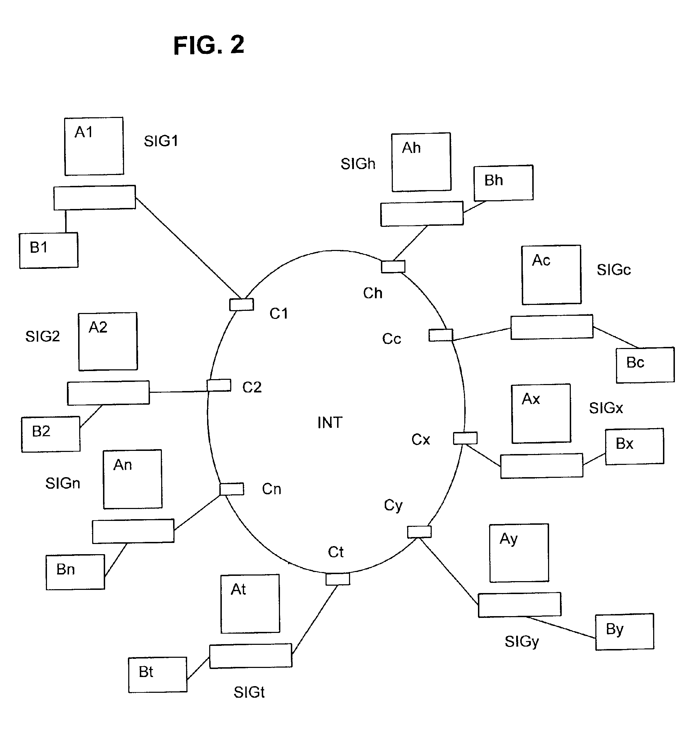

Les équipements requis pour mettre en oeuvre le procédé de l'invention sont illustrés par la figure 2. Un ordinateur A1 est disposé chez le signataire SIG1 et est pourvu d'un outil B1 agencé pour permettre l'apposition de la signature S1. Cet outil est par exemple un appareil de lecture d'une carte à puce ou d'un dispositif d'identification d'une empreinte digitale ou d'un appareil de détection du fond de l'oeil ou similaire permettant d'identifier de manière certaine le signataire SIG1. Cet ordinateur communique par l'intermédiaire d'un routeur C1 avec le réseau Internet appelé par la suite INT. De façon similaire, des ordinateurs A2, An sont disposés chez les signataires SIG2, SIGn et sont pourvus d'outils B2, Bn agencés pour permettre l'apposition des signatures S2, Sn. Ces ordinateurs communiquent par l'intermédiaire de routeurs C2, Cn avec le réseau INT. Il en est de même également de toutes les personnes SIGx, SIGy habilitées à apposer des sur-signatures Sx, Sy qui disposent d'ordinateurs Ax, Ay connectés à travers des routeurs Cx, Cy au réseau INT Comme cela a été mentionné précédemment, peuvent encore intervenir dans le procédé, un tiers archiveur, signataire SIGt, avec un ordinateur At équipé d'un outil Bt pour apposer sa signature et relié via un routeur Ct au réseau INT, un horodateur, signataire SIGh, avec un ordinateur Ah équipé d'un outil Bh pour apposer sa signature et relié via un routeur Ch au réseau INT et un tiers équipé d'un serveur de cryptage ou d'empreinte, appelé signataire SIGc, avec un ordinateur Ac équipé d'un outil Bc pour apposer sa signature et relié via un routeur Cc au réseau INT.

Le procédé selon l'invention n'est pas limité en ce qui concerne le nombre de signataires, ni le nombre de sur-signataires. Les équipements individuels sont des matériels standards.

## Revendications

1. Procédé d'apposition en ligne d'une pluralité de signatures numériques sur un document électronique, **caractérisé en ce qu'**il comporte une première phase qui est l'émission d'une notification de signature, une deuxième phase qui est l'ajout d'une signature et une troisième phase qui est la clôture du procédé de signatures multiples.

2. Procédé selon la revendication 1, **caractérisé en ce qu'**au cours de la première phase d'amorçage, l'émetteur du document à signer met le document accompagné d'un message codé à la disposition de chacun des signataires au moyen d'un ordinateur équipé de moyens permettant de transmettre des documents électroniques.

3. Procédé selon la revendication 2, **caractérisé en ce que** le message codé est spécifique et différent pour chacun des signataires.

4. Procédé selon la revendication 3, **caractérisé en ce que** le message est codé à l'aide de la clé publique contenue dans le certificat électronique de chaque signataire.

5. Procédé selon l'une quelconque des revendications 2 à 4, **caractérisé en ce qu'**au cours de la deuxième phase, tout signataire apte à décoder le message qui lui est destiné est autorisé à signer le document reçu.

6. Procédé selon la revendication 5, **caractérisé en ce que** le signataire retourne sa signature à l'émetteur afin qu'il puisse la vérifier et la prendre en compte.

7. Procédé selon la revendication 6, **caractérisé en ce qu'**au cours de la troisième phase, l'émetteur ayant reçu et vérifié l'ensemble des signatures appose sa contre signature sur les signatures reçues afin d'empêcher une modification ultérieure.

8. Procédé selon la revendication 7, **caractérisé en ce que** l'émetteur horodate sa signature afin de prouver d'une manière certaine l'existence du document et des signatures à l'heure et à la date indiquées.
